# DEMANDE DE BREVET EUROPEEN

(11) **EP 1 264 539 A1**
(43) Date de publication de la demande: **11.12.2002**
(21) Numéro de dépôt: 02352012.5
(22) Date de dépôt: 05.06.2002
(51) Int. Cl.: A01K 1/06, A01K 1/12

(54) **Installation pour la traite et/ou le nourrissage des ovins ou des caprins**

(30) Priorité: 06.06.2001 FR 0107364
(71) Demandeur: GAEC des Martouls, 12 290 Ségur (FR)
(72) Inventeur: Boutet, Lilian, 12290 Ségur (FR); Dupuy, Jean-Pierre, 12290 Ségur (FR)

(57) **Abrégé**

L'installation pour la traite et le nourrissage des ovins ou caprins comprend des stalles (1) pourvues à l'avant d'ouvertures de dégagement (5) obturées par une paroi (6) commune, mobile de bas en haut et inversement, associée à un ou plusieurs cornadis (7) constitués chacun par une fente verticale (7a) et par un organe (7b) de maintien du cou de l'animal dans ia fente, cet organe (7b) étant associé mécaniquement à une structure (8) indépendante, mobile entre une première position vers une seconde position pour amener et/ou maintenir l'organe (7b) dans une position de maintien du cou de l'animal dans la fente (7a), et de la seconde position yers la première position en vue d'éloigner ou de permettre d'éloigner de la fente l'organe (7b) afin de libérer le cou de l'animal ou permettre l'introduction du cou de l'animal dans la fente. Le mouvement d'entraînement de la paroi (6) vers le haut, se produit après que les organes d'immobilisation (7b) aient été dégagés des fentes (7a).

## Description

La présente invention se rapporte à une installation pour la traite et/ou le nourrissage d'animaux d'élevage, et plus particulièrement d'ovins ou caprins. Plus précisément, la présente invention se rapporte à un système de positionnement et d'immobilisation des ovins dans leurs stalles.

Les installations de traite et/ou de nourrissage comprennent généralement une série de stalles réparties face à un couloir d'arrivée des brebis.

Ces stalles sont matérialisées par des séparations d'une part, se présentant sous forme de parois, et par des cornadis d'autre part, prévus pour immobiliser les animaux en venant autour de leurs cous.

Ces installations, largement utilisées, présentent un certain nombre d'inconvénients.

D'abord, les stalles sont matérialisées par des parois rigides, déterminant entre elles, des intervalles fixes dans lesquels s'introduisent les animaux.

La rigidité de ces parois ainsi que leur inamovibilité ne permettent pas de compenser les variations de la taille du ventre des brebis, de sorte que les brebis gestantes se trouvent bien souvent à l'étroit dans les stalles. Cet inconvénient se traduit bien souvent par une compression trop élevée de la zone ventrale des femelles gestantes ce qui peut conduire à terme à des avortements ou à des malformations des agneaux.

Il en résultera des pertes d'exploitation pour l'éleveur.

Un autre problème peut se poser pour l'évacuation des animaux des stalles.

Généralement, ces derniers sont évacués par le couloir d'arrivée ce qui engendre des pertes de temps en ralentissant l'arrivée des nouveaux animaux.

D'autres systèmes prévoient l'évacuation des animaux par l'avant, dans ce cas, chaque stalle est équipée d'une ouverture d'introduction et d'une ouverture d'évacuation obturée par un cornadis.

Un de ces systèmes est notamment connu du EP 610 093.

Ces cornadis sont généralement constitués par des structures articulées mobiles en pivotement autour d'un axe horizontal.

De tels cornadis n'assurent cependant pas une obturation totale des ouvertures avant des stalles, de sorte qu'ils ne peuvent pas être utilisés pour l'immobilisation d'animaux de tailles réduites, comme les ovins ou les caprins, qui peuvent facilement se dégager de ces systèmes d'immobilisation.

Aussi ces cornadis, constituant obturation avant, sont utilisés pour l'immobilisation des bovins.

Les stalles des installations de traite, pour ovins ou caprins, sont donc obturées, en partie avant, par des cornadis constitués habituellement par des panneaux rigides immobiles pourvus d'ouvertures verticales en regard de chaque stalle dans lesquelles les animaux introduisent leurs cous.

Des systèmes de condamnation sont associés à ces ouvertures pour immobiliser les animaux.

Une telle disposition est notamment connue de FR 2 711 038.

Si de telles dispositions permettent une immobilisation certaine des animaux en interdisant le dégagement inopiné de ces derniers, ils ne résolvent cependant pas le problème de l'évacuation des animaux. En effet, l'immobilité des panneaux interdit l'évacuation des animaux par l'avant.

La présente invention a pour objet de résoudre les problèmes sus évoqués en mettant en oeuvre une installation de traite pour ovins ou caprins conçue pour permettre l'évacuation des animaux par l'avant des stalles.

Un autre but de la présente invention est la mise en oeuvre d'une installation dont les stalles sont délimitées par des parois susceptibles d'absorber les variations dimensionnelles des ventres des brebis restantes.

À cet effet, l'installation selon l'invention, pour la traite et pour le nourrissage des ovins ou caprins comprenant une suite de stalles alignées face à un couloir d'introduction des animaux, chaque stalle étant délimitée par deux parois verticales qui en position d'occupation des animaux sont perpendiculaires ou obliques à l'axe du couloir, chaque stalle étant pourvue à l'avant d'une ouverture de dégagement obturée par une paroi commune, associée à un ou plusieurs cornadis, se caractérise essentiellement en ce que la paroi d'obturation est mobile de bas en haut et de haut en bas et que chaque cornadis est constitué par une fente verticale pratiquée dans la paroi mobile d'obturation et par un organe de maintien du cou de l'animal dans la fente, cet organe de maintien étant associé mécaniquement à une structure support indépendante, mobile entre une première position vers une seconde position pour amener et/ou maintenir l'organe de maintien dans une position de maintien du cou de l'animal dans la fente, et de la seconde position vers la première position en vue d'éloigner ou de permettre d'éloigner l'organe de maintien de la fente pour libérer le cou de l'animal ou permettre l'introduction du cou de l'animal dans la fente, la dite structure étant mobilisée de la première position vers la seconde position et inversement par un moyen moteur d'entraînement, et la paroi mobile étant également mobilisée de haut en bas et de bas en haut par un moyen moteur, le mouvement d'entraînement de ladite paroi vers le haut, afin de dégager l'ouverture, se produisant après que les organes d'immobilisation aient été dégagés totalement des fentes.

Selon une autre caractéristique de l'invention, l'organe de maintien du cou de l'animal dans la fente, est monté sur la structure support indépendante, cette structure étant mobile de haut en bas pour amener et/ou maintenir l'organe de maintien dans ou en regard de la fente en vue du maintien du cou de l'animal dans la fente, et de bas en haut en vue d'éloigner ou de permettre d'éloigner l'organe de maintien de la fente pour libérer le cou de l'animal ou permettre l'introduction du cou de l'animal dans la fente, la dite structure étant mobilisée de bas en haut ou de haut en bas par un moyen moteur d'entraînement, et la paroi mobile étant également mobilisée de haut en bas et de bas en haut par un moyen moteur, le mouvement d'entraînement de ladite paroi vers le haut, afin de dégager l'ouverture, se produisant après que les organes d'immobilisation aient été dégagés totalement des fentes et ensuite étant conjoint au mouvement vers le haut de la structure support.

Selon une autre caractéristique de l'invention, les parois délimitant latéralement les stalles sont constituées chacune d'un cadre rigide et d'une feuille d'un matériau souple par exemple du caoutchouc ou autre constituant élément de remplissage du cadre, la feuille souple formant dans le cadre au moins une onde afin d'absorber les variations de la taille de la panse des animaux.

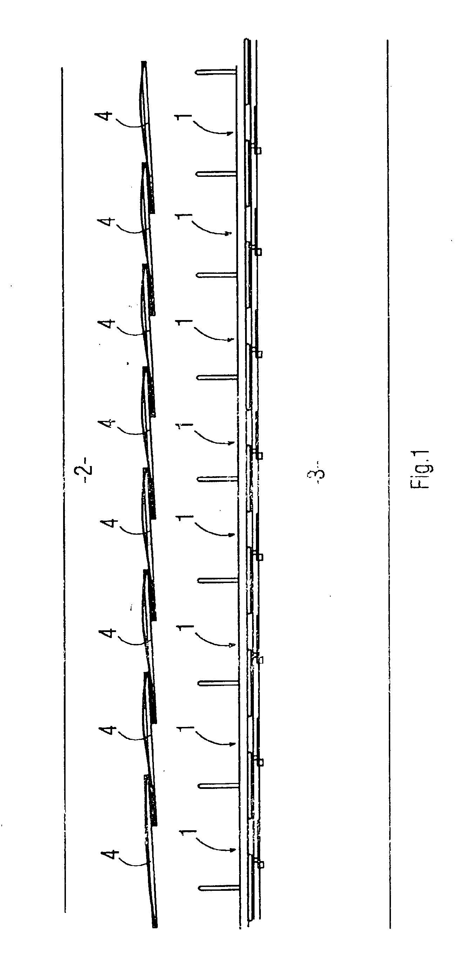

D'autres buts, avantages et caractéristiques de l'invention apparaîtront à la lecture de la description d'une forme préférée de réalisation donnée à titre d'exemple non limitatif en se référant aux dessins annexés en lesquels
- la figure 1 est une vue de dessus de l'installation selon l'invention,

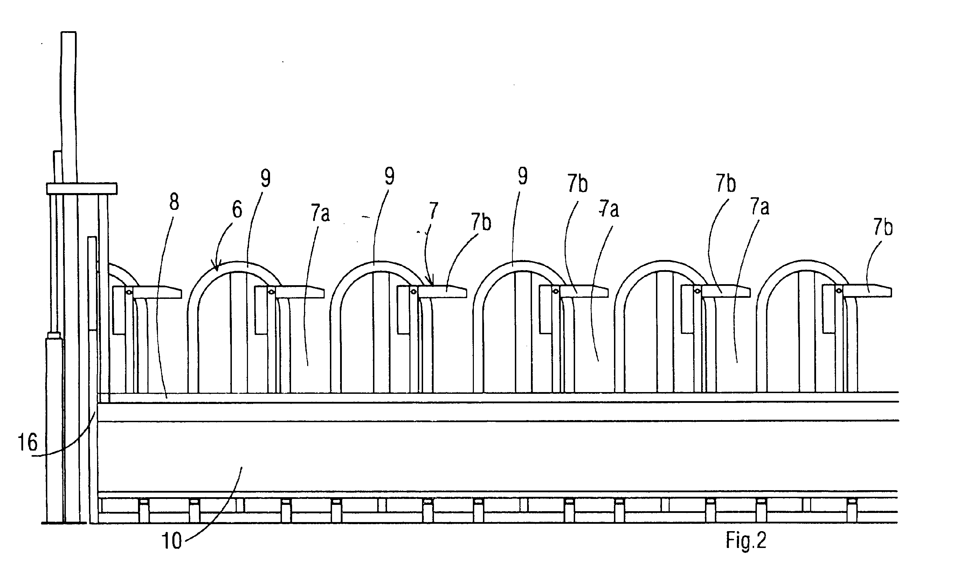

- la figure 2 est une vue arrière de l'installation selon l'invention, la paroi mobile étant en position basse, d'occlusion, et les organes de maintien étant en position de maintien du cou de chaque animal dans les fentes de la paroi mobile,

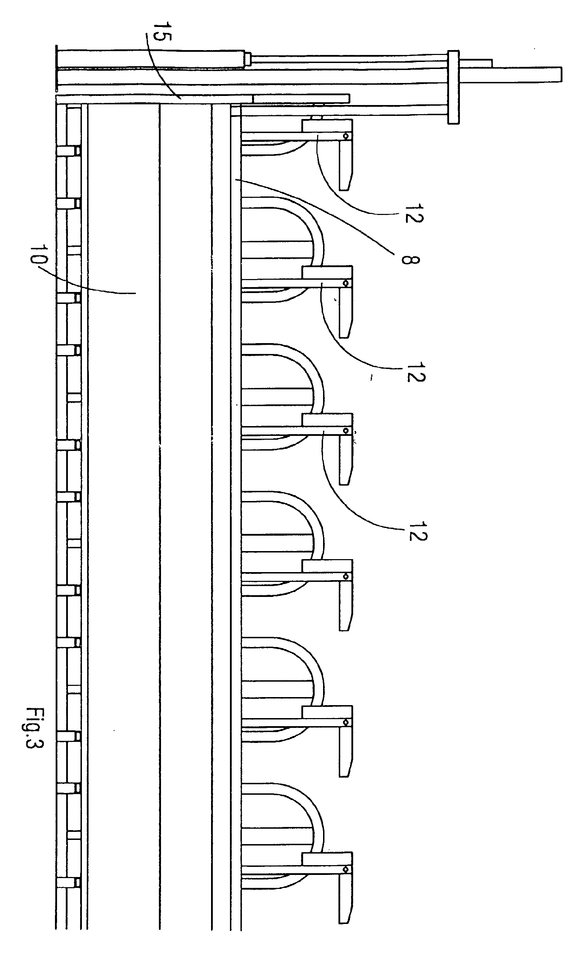

- la figure 3 est une vue arrière de l'installation selon l'invention, la paroi mobile étant en position basse, d'occlusion, et les organes de maintien étant écartés des fentes de la paroi mobile,

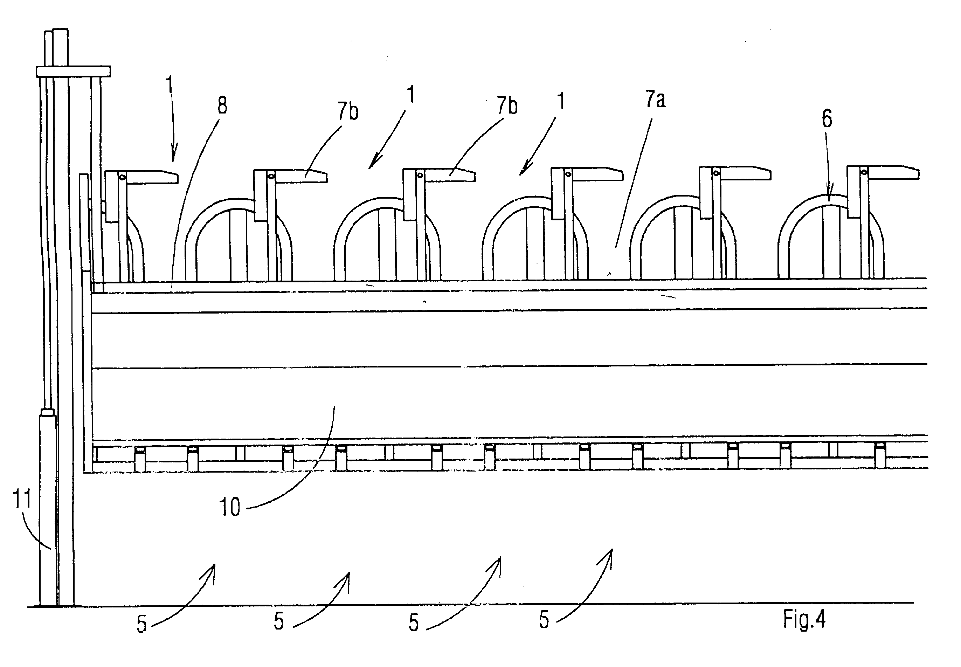

- la figure 4 est une vue arrière de l'installation selon l'invention, la paroi mobile étant en position haute,

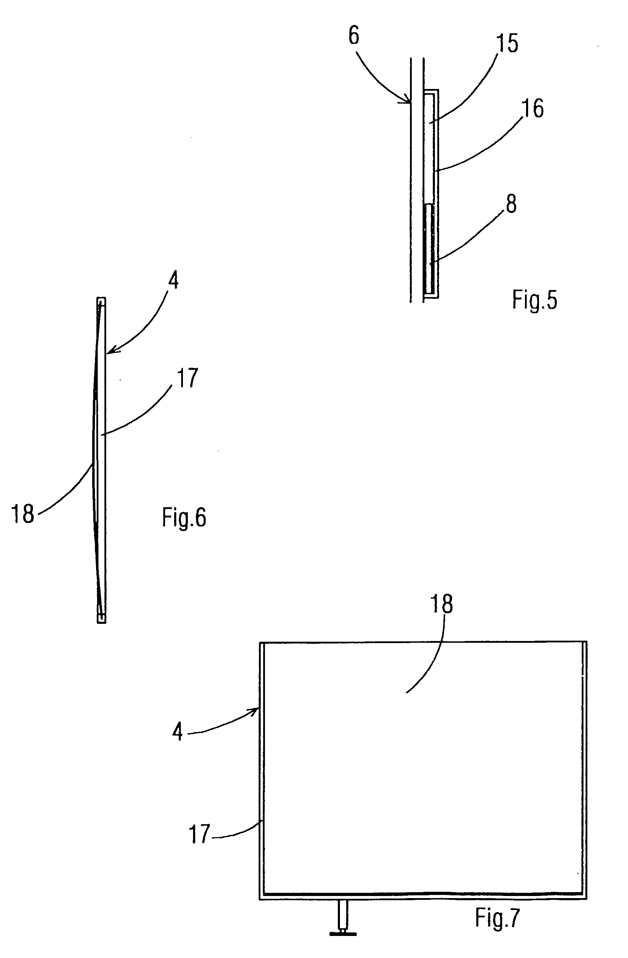

- la figure 5 est une vue de détail de l'installation selon l'invention,
- la figure 6 est une vue de dessus d'une paroi mobile de stalle,
- la figure 7 est une vue de face d'une paroi mobile de stalle.

Telle que représentée, l'installation selon l'invention, pour la traite ou le nourrissage des ovins ou caprins comprend une série de stalles 1 alignées, disposées en regard d'un couloir 2 d'amenée des animaux à traire ou à nourrir et en regard d'un couloir 3 d'évacuation des dits animaux. D'une autre manière, l'installation est formée de plusieurs stalles 1, alignées selon une droite, disposées dans l'intervalle formé entre un couloir 2 d'amenée des animaux et un couloir 3 d'évacuation des dits animaux, parallèle au couloir d'amenée 2.

Chaque stalle est délimitée par deux parois verticales 4 qui en position d'occupation des stalles par les animaux sont perpendiculaires ou obliques à l'axe longitudinal du couloir. Comme on peut le voir chaque paroi 4 à l'exception des parois d'extrémités, sépare deux stalles 1 consécutives.

Les stalles sont pourvues à l'avant, en relation avec le couloir d'évacuation 3, d'ouvertures 5 d'évacuation des ovins ou des caprins, ces ouvertures étant associées à une paroi d'obturation 6 et à un cornadis 7.

Selon la forme préférée de réalisation, les différentes ouvertures 5 sont associées à une paroi d'obturation 6 commune et chacune à un cornadis 7 qui est propre à la stalle 1.

Conformément à l'invention, la paroi d'obturation 6 est mobile d'abord de bas en haut et de haut en bas et chaque cornadis est constitué par une fente verticale 7a pratiquée dans la paroi mobile et par un organe 7b de maintien du cou de l'animal dans la fente 7a. Cet organe de maintien est monté sur une structure support 8, indépendante, mobile de haut en bas pour amener l'organe de maintien 7b dans ou en regard de la fente 7a et immobiliser le cou de l'animal dans la fente et donc l'animal dans la stalle et ensuite de bas en haut en vue d'éloigner l'organe de maintien 7b de la fente 7a pour libérer le cou de l'animal ou permettre l'introduction du cou de l'animal dans la fente 7a. La structure porteuse 8 est commune à tous les organes de maintien 7b.

La structure porteuse 8 est mobilisée de bas en haut et de haut en bas par un moyen moteur 11. La paroi mobile d'obturation 6 est également mobilisée de haut en bas et de bas en haut par un moyen moteur, le mouvement d'entraînement de ladite paroi vers le haut, afin de dégager l'ouverture, se produisant après dégagement total des organes de maintien des fentes 7a de ladite paroi 6 et étant conjoint au mouvement vers le haut de la structure support 8.

Selon la forme préférée de réalisation, les mouvements de la structure support 8 et de la paroi d'obturation 6 sont verticaux.

La paroi d'obturation 6 comprend un cadre métallique constitué par deux longerons horizontaux, parallèles joints par des montants d'extrémité et éventuellement par des montants intermédiaires. Sur le longeron supérieur, sont dressés verticalement plusieurs arceaux 9 régulièrement espacés délimitant les fentes verticales 7a. Chaque arceau 9, en partie supérieure, présente une forme arrondie pour écarter le risque de blesser les animaux. Par ailleurs les arceaux 9 sont formés par des tubes de section droite circulaire, exempt d'arrête vive, toujours pour éviter de blesser les animaux.

À la paroi d'obturation 3 est fixée extérieurement aux stalles 1 une mangeoire 10 de nourrissage 10. Cette mangeoire 10 est disposée selon un niveau inférieur par rapport aux fentes 7a de sorte que les animaux, introduisent d'eux-mêmes leurs cous dans les fentes 7a et abaissent leurs têtes pour atteindre la nourriture placée dans la mangeoire 10. Par ce biais les animaux prennent d'eux-mêmes la position adéquate avant immobilisation.

Préférentiellement, la paroi d'obturation 6 est mobilisée de manière différée, dans le sens de l'ouverture par le moyen moteur d'entraînement 11 de la structure support 8 des organes de maintien 7b. Cette disposition est particulièrement avantageuse puisqu'elle n'utilise qu'un seul moyen moteur ce qui réduit tant le coût de l'installation que le coût des travaux de maintenance.

Chaque organe de maintien 7b est constitué par un loquet articulé à un bras vertical 12 fixé à la structure support 8 et formant saillie au-dessus de cette dernière, ce loquet étant angulairement mobile entre une position horizontale transversale à la fente 7a et une position verticale de repli latéral par rapport à cette fente 7a, ledit loquet étant pourvu d'un organe 13 de rappel en position horizontale et d'une butée de fin de course s'opposant au basculement du loquet, vers le haut à partir de sa position horizontale. Les bras verticaux 12, comme on peut le voir sont latéraux aux fentes 7a.
L'animal par simple mouvement de son cou vient repousser le loquet vers le bas. Le loquet une fois libéré revient sous l'effet de l'action de l'organe de rappel 13 revient en position horizontale au-dessus du cou de l'animal ce qui interdit audit animal d'extraire son cou de la fente 7a.

Préférentiellement, l'organe de rappel 13 et la butée sont constitués par un même contrepoids. Ce dernier, en position horizontale du loquet vient buter contre le bras support 12.

La structure support des loquets comprend au moins un élément longiligne horizontal 14 s'étendant d'une extrémité à l'autre de ladite installation, cet élément longiligne horizontal portant de place en place les bras verticaux 12 support des loquets 7b. Cet élément longiligne 14 est solidarisé par chacune de ses extrémités au moyen moteur d'entraînement 11.

Selon la forme préférée de réalisation, la structure support 8 est formée par un cadre comportant un longeron supérieur et un longeron inférieur et deux montants d'extrémités, les organes de maintien étant supporté par le longeron supérieur et ledit cadre recevant un panneau d'obturation. Comme on le comprend l'élément longiligne horizontal est constitué par le longeron supérieur du cadre de la structure support 8.

La paroi d'obturation 6, sur la course de bas en haut de la structure support 8 est pourvue de deux butées 15 d'entraînement, distantes l'une de l'autre et alignées selon un même axe horizontal.

En position basse, la structure support 8 est écartée des deux butées 15 et occupe un niveau inférieur par rapport à ces dernières. Lors de l'entraînement vers le haut de la structure support 8, les organes de maintien s'écartent des fentes 7a et les animaux peuvent extraire leurs cous de ces dernières. Lorsque la structure support parvient au contact des butées 15 elle entraîne dans son mouvement ascendant la paroi d'obturation 6. Sous l'effet de ce mouvement ascendant, qui se produit à vitesse modérée, les animaux encore engagés par leurs cous dans les fentes 7a sont forcés à s'extraire de ces dernières. La poursuite du mouvement ascendant de la structure support et de la paroi 6 permet de libérer l'ouverture avant 5 pour permettre l'évacuation des animaux vers le couloir 3.

Préférentiellement la structure support 8 des organes de maintien 7b est mobile dans deux glissières 16 d'extrémités, espacées l'une de l'autre selon un axe horizontal et solidaires toutes deux de la paroi mobile d'obturation 6. Préférentiellement les butées 15 sont formées par les parties supérieures des glissières 16.

Selon la forme préférée de réalisation, le moyen moteur d'entraînement est constitué par deux vérins pneumatiques ou hydrauliques dressés verticalement et disposés de part et d'autre de la structure porteuse 8 en fixation à deux montants verticaux fixés au sol. À la tige de chacun de ces vérins est fixée une structure rigide de liaison à la paroi 6.

Les parois 4 délimitant latéralement les stalles sont constituées chacune d'un cadre rigide 17 en U et d'une feuille 18 d'un matériau souple par exemple du caoutchouc ou autre, constituant élément de remplissage du cadre. Le cadre est constitué de deux montants verticaux réunis l'un à l'autre en extrémité inférieure par une traverse. Il y a lieu de noter que la paroi souple 18 n'est pas mise en tension dans le cadre au contraire, elle est montée de manière lâche dans ce dernier ce qui confère notamment à sa zone centrale une latitude de déplacement latéral limité par rapport au cadre pour absorber les variations de la taille de la panse des animaux et ce sans aucune compression. Ainsi, la paroi souple 18 forme dans le cadre 17 au moins une onde afin d'absorber les variations de la taille de la panse des animaux. On écarte ainsi tout risque de compression ventrale exagérée des femelles gestantes. Il y a lieu de noter que le cadre est dimensionné en sorte que ses montants et traverse soient à écartement de la zone ventrale de l'animal. En outre l'espace délimité par les montants et traverse du cadre n'est occupé que par la paroi souple 18. La paroi souple 18 sera fixée par ses bordures latérales verticales aux deux montants verticaux du cadre. En revanche la paroi souple 18 par sa bordure horizontale inférieure sera libre de toute fixation au cadre.

La paroi 4 est supporté au-dessus du sol par un support vertical 19 fixé à la traverse inférieure du cadre. Ce support vertical 19 est externe au cadre. On comprend qu'en raison de ces dispositions, aucun élément rigide ne peut venir au contact de la zone ventrale de l'animal. On minimise ainsi les risques de blessure. Selon la forme préférée de réalisation, le support vertical 19 est fixé au sol par son extrémité inférieure. Par son extrémité supérieure, ce support est solidaire de la traverse inférieure du cadre 17.

En variante, le cadre sera pourvu d'une traverse supérieure et sera suspendu au support vertical par cette traverse supérieure. Dans ce cas de figure, le support vertical sera fixé à une structure porteuse.

Avantageusement, les parois 4, en position d'inoccupation des stalles 1 sont repliées en recouvrement les unes des autres ou en écaille, parallèlement aux couloirs 2, 3, lesdites parois 4 étant mobiles en pivotement autour d'un axe vertical.

Préférentiellement chaque paroi 4 est mobile autour de l'axe longitudinal de son support vertical 19. Ainsi ce support constitue un pivot vertical et comprend un fourreau vertical cylindrique dans lequel a été pratiqué un alésage cylindrique vertical de guidage et un tourillon cylindrique vertical engagé en rotation dans l'alésage cylindrique du fourreau. Le fourreau pourra par exemple être fixé à la traverse inférieure du cadre et le tourillon à une platine horizontale de fixation au sol. Dans le cas ou le cadre, par sa traverse supérieure est suspendu au support 19, le tourillon de ce dernier sera bloqué en translation dans le fourreau.

L'installation telle que décrite notamment grâce aux mouvements verticaux d'ouverture et de fermeture de la paroi 6 et de la structure porteuse peut être disposée dans des endroits ne disposant que d'une place limitée en avant des stalles.

Il va de soi que la présente invention peut recevoir tous aménagements et variantes du domaine des équivalents techniques. Ainsi l'organe 7b de maintien du cou de l'animal peut prendre différentes formes. Ainsi on pourra prévoir un organe constitué par deux mâchoires articulées mobiles l'une vers l'autre pour venir autour du cou de l'animal et en écartement l'une de l'autre pour libérer le cou de l'animal. On pourra prévoir aussi un élément de maintien constitué par une tige coudée articulée à l'arceau 9 et bloquée en position d'immobilisation par une barre horizontale, mobile horizontalement.

## Revendications

1. Installation pour la traite et pour le nourrissage des ovins ou caprins comprenant une suite de stalles (1) alignées face à un couloir d'introduction (2) des animaux, chaque stalle (1) étant délimitée par deux parois verticales (4) qui en position d'occupation des animaux sont perpendiculaires ou obliques à l'axe du couloir (2), chaque stalle (1) étant pourvue à l'avant d'une ouverture de dégagement (5) obturée par une paroi (6) commune, associée à un ou plusieurs cornadis (7), **caractérisée en ce que** la paroi d'obturation (6) est mobile de bas en haut et de haut en bas et que chaque cornadis (7) est constitué par une fente verticale (7a) pratiquée dans la paroi mobile d'obturation (6) et par un organe (7b) de maintien du cou de l'animal dans la fente, cet organe de maintien étant associé mécaniquement à une structure support (8) indépendante, mobile entre une première position vers une seconde position pour amener et/ou maintenir l'organe de maintien dans une position de maintien du cou de l'animal dans la fente (7a), et de la seconde position vers la première position en vue d'éloigner ou de permettre d'éloigner l'organe de maintien de la fente pour libérer le cou de l'animal ou permettre l'introduction du cou de l'animal dans la fente, la dite structure (8) étant mobilisée de la première position vers la seconde position et inversement par un moyen moteur d'entraînement, et la paroi mobile (6) étant également mobilisée de haut en bas et de bas en haut par un moyen moteur, le mouvement d'entraînement de ladite paroi (6) vers le haut afin de dégager l'ouverture, se produisant après que les organes d'immobilisation (7b) aient été dégagés totalement des fentes (7a).

2. Installation selon la revendication i **caractérisée en ce que** par l'organe (7b) de maintien du cou de l'animal dans la fente, est monté sur la structure support (8) indépendante, que cette structure est mobile de haut en bas pour amener et/ou maintenir l'organe de maintien dans ou en regard de la fente (7a) en vue du maintien du cou de l'animal dans la fente, et de bas en haut en vue d'éloigner ou de permettre d'éloigner l'organe de maintien de la fente pour libérer le cou de l'animal ou permettre l'introduction du cou de l'animal dans la fente, ladite structure (8) étant mobilisée de bas en haut ou de haut en bas par un moyen moteur d'entraînement, et la paroi mobile (6) étant également mobilisée de haut.

3. Installation selon la revendication 1 ou 2, **caractérisée en ce que** la paroi mobile d'obturation (6) est mobilisée de manière différée, dans le sens de l'ouverture par le moyen moteur d'entraînement (11) de la structure support (8) des organes de maintien (7b).

4. Installation selon l'une quelconque des revendications précédentes, **caractérisée en ce que** chaque organe de maintien 7b est constitué par un loquet articulé à un bras vertical (12), fixé à la structure support (8) et formant saillie au-dessus de cette dernière, ce loquet étant angulairement mobile entre une position horizontale transversale à la fente (7a) et une position verticale de repli latéral par rapport à cette fente (7a), ledit loquet étant pourvu d'un organe (13) de rappel en position en position horizontale et d'une butée de butée de fin de course s'opposant au basculement du loquet vers le haut à partir de sa position horizontale.

5. Installation selon la revendication 4, **caractérisée en ce que** l'organe de rappel (13) et la butée sont constitués par un même contrepoids, ce dernier, en position horizontale du loquet venant buter contre le bras support (12).

6. Installation selon l'une quelconque des revendications 1 à 5, **caractérisée en ce que** la structure support (8) des loquets (7b) comprend au moins un élément longiligne horizontal (14) s'étendant d'une extrémité à l'autre de ladite installation, cet élément longiligne horizontal portant de place en place les bras verticaux (12) support des loquets (7b) et que ledit élément longiligne (14) est solidarisé par chacune de ses extrémités du moyen moteur d'entraînement (11).

7. Installation selon l'une quelconque des revendications précédentes, **caractérisée en ce que** la paroi d'obturation (6) sur la course de bas en haut de la structure support (8) est pourvue de deux butées (15) d'entraînement, distantes l'une de l'autre et alignées selon un même axe horizontal.

8. Installation selon l'une quelconque des revendications précédentes, **caractérisée en ce que** la structure support (8) des organes de maintien (7b) est mobile dans deux glissières (16) d'extrémités espacées l'une de l'autre selon un axe horizontal et solidaires toutes deux de la paroi mobile d'obturation (6).

9. Installation selon les revendications 7 et 8 prises ensemble, **caractérisée en ce que** les butées (15) sont formées par les parties supérieures des glissières (16).

10. Installation selon l'une quelconques des revendications précédentes, **caractérisée en ce que** la structure support (8) est formée par un cadre comportant un longeron supérieur et un longeron inférieur et deux montants d'extrémités, les organes de maintien étant supporté par le longeron supérieur et le dit cadre recevant un panneau d'obturation.

11. Installation selon l'une quelconque des revendications précédentes, **caractérisée en ce qu'**à la paroi d'obturation (3) est fixée extérieurement aux stalles (1), une mangeoire (10) de nourrissage.

12. Installation selon l'une quelconque des revendications précédentes **caractérisée en ce que** parois (4) délimitant latéralement les stalles sont constituées chacune d'un cadre rigide (17) et d'une feuille (18) d'un matériau souple par exemple du caoutchouc ou autre constituant élément de remplissage du cadre, la paroi souple (18) formant dans le cadre (17) au moins une onde afin d'absorber les variations de la taille de la panse des animaux.

13. Installation selon l'une quelconque des revendications précédentes, **caractérisée en ce que** les parois (4), en position d'inoccupation des stalles (1) sont repliées en recouvrement les unes des autres ou en écaille, parallèlement aux couloirs (2,3), les dites parois (4) étant mobiles en pivotement autour d'un axe vertical.
